# EUROPEAN PATENT SPECIFICATION

(11) **EP 3 109 960 B1**
(45) Date of publication and mention of the grant of the patent: **17.06.2020**
(21) Application number: 16176104.4
(22) Date of filing: 24.06.2016
(51) Int. Cl.: H02G 3/18

(54) **MOUNTING ASSEMBLY WITH IMPROVED MOUNTING BOX**
MONTAGEANORDNUNG MIT VERBESSERTEM MONTAGEGEHÄUSE
ENSEMBLE DE MONTAGE AVEC BOÎTE DE MONTAGE AMÉLIORÉ

(30) Priority: 26.06.2015 BE 201505397
(43) Date of publication of application: 28.12.2016
(73) Proprietor: Niko NV, 9100 Sint-Niklaas (BE)
(72) Inventor: Cooreman, Tom, 9310 Meldert (Aalst) (BE)
(74) Representative: D'Halleweyn, Nele Veerle Trees Gertrudis

(56) References cited:
- WO-A1-2008/023102
- ES-U- 1 066 783
- FR-A1- 3 000 309
- US-A- 4 046 449
- US-A- 4 460 233

## Description

### Technical field of the invention

The present invention relates to a mounting assembly for mounting an electrical function in a wall of a building comprising a mounting box for use in such a mounting assembly.

### Background of the invention

Existing mounting assemblies for mounting an electrical function in wall typically comprise a mounting box, a mounting frame and a carrier which is provided in the mounting box and on which at least a part of the electrical function is provided. In such existing systems, the mounting frame, sometimes also referred to as the bridge, is attachable around an upper edge of the mounting box, and the carrier with components of the electrical function, for example a dimmer function, is attached in the mounting box by means of clamps or screws.

A drawback of these existing systems is that the attachment of the carrier and of the mounting frame requires many actions and/or may be complex.

FR 3 000 309 relates a box to be flush-mounted, comprising a side wall defining an inner housing for receiving an equipment module, and means for fastening same to a wall, comprising at least one flap movably mounted, through an opening provided in said side wall, between a retracted position in which it does not interfere with the insertion of the box to be flush-mounted into a recess in the wall, and a deployed position in which it locks said box in said recess. US4046449A related to a system for the easy and secure interchangeable attachment to a mounting plate of electrical equipment carried on the insulating frame, comprising a lip to secure the carrier inside the box. ES1066783U discloses a box to contain an electrical equipment comprising a flexible lip to fix the box to the wall.

### Summary of the invention

It is an object of embodiments of the invention to provide a mounting assembly which allows mounting of, on the one hand, the carrier in the mounting box and, on the other hand, the mounting box in the mounting frame, in a simple way.

To this end, the present invention provides a mounting assembly for mounting an electrical function in an opening a wall of a building. The mounting assembly comprises a mounting box with a back side, an open front side and a wall between the back side and the open front side. The mounting assembly furthermore comprises a carrier comprising one or more components of the electrical function and being attachable in the mounting box via the open front side. The mounting assembly also comprises a mounting frame for mounting the mounting assembly against the wall. According to the invention, the wall of the mounting box is, near the open front side, provided with at least a first integrated resilient lip with an inner surface facing the interior of the mounting box and with an outer surface. The inner surface of the first resilient lip is provided with a carrier guiding part projecting from the wall into the mounting box, the carrier guiding part being arranged to make the first resilient lip spring outwards when the carrier is provided in the mounting box, and to extend, in the mounted position, over or into the carrier to retain the carrier in the mounting box. The outer surface of the first resilient lip is provided with a mounting frame guiding part projecting outwards from the wall, the mounting frame guiding part being arranged to make the first resilient lip spring inwards when the mounting box is provided in the mounting frame, and to extend, in the mounted position, at a back side of the mounting frame to clamp the mounting frame.

By providing resilient lip in the wall of the mounting box, means is provided with which both the mounting frame and the carrier can be attached. The resilient lip will thus allow smooth and quick mounting of both the carrier and the mounting frame. Compared to prior art solutions, the useful mounting surface of the mounting frame will be larger. This is because, in the prior art solutions, connections (fuse connections or screws) are provided in multiple positions, whereas these can typically be omitted in mounting assemblies according to embodiments of the invention.

A further advantage of a mounting assembly according to embodiments of the invention is that demounting of the assembly may also be done in a simple way by moving the resilient lip inwards or outwards for respectively removing the mounting frame or the carrier. Because the resilient lip is capable of bending both inwards and outwards, the mounting box may simply be recuperated without damaging. This is not possible in case of existing prior art solutions, where the mounting box cannot be removed without damaging it.

According to embodiments of the invention, the mounting box may substantially be beam-shaped, and the wall may, between the back side and the open front side, comprise four side walls. According to these embodiments, resilient lips may be provided in more than one side wall. More preferably, resilient lips may be provided in opposite side walls. In this way, two opposite resilient lips can together fix the mounting frame and the carrier in the mounting box. Further, in the back side of the mounting box, openings may be provided for electrical wires for connecting the electrical function to the mains.

According to the invention, the wall of the mounting box may, near the open front side and at its outer circumference, be provided with an abutment arranged to extend on a front side of the mounting frame, such that the mounting frame can be clamped between the abutment and the mounting frame guiding part. The abutment may preferably be formed as a part projecting from the outer circumference of the wall of the mounting box. The abutment may be formed as a from the outer circumference of the wall projecting continuous circumferential edge around the open front side. According to further embodiments, the abutment may consist of multiple abutment parts formed at the outer circumference of the wall of the mounting box. In this way, the mounting box may easily and smoothly be mounted in the mounting frame. When the mounting box is provided, the mounting frame will first make the resilient lip spring inwards until the mounting frame contacts the abutment, and at that moment the resilient lip will spring back outwards to fix the mounting frame between the abutment and the mounting frame guiding part.

The mounting box may, according to embodiments of the invention, be provided with a support for the carrier for clamping the carrier between the support and the carrier guiding part. The support my preferably be provided as a part projecting from an inner surface of the wall of the mounting box. However, according to further embodiments, the support may also be provided at an inner surface of the back side. According to still further embodiments, it is also possible to provide the carrier directly against the back side of the mounting box.

Preferably, the carrier guiding part may gradually be going upwards, i.e. the carrier guiding part may preferably have an inclined surface going up, viewed from the open front side to the back side of the mounting box. In this manner, the resilient lip may gradually be pressed outwards when the carrier is provided in the mounting box, and the carrier can be mounted easily and smoothly. Similarly, the mounting frame guiding part may preferably gradually be going upwards, i.e. the mounting frame guiding part may preferably have an inclined surface going up, viewed from the back side to the open front side of the mounting box. In this way, the resilient lip may gradually be pressed inwards when the mounting box is provided in the mounting frame, and the mounting box can easily and smoothly be mounted in the mounting frame.

According to embodiments of the invention, the carrier may comprise at least one PCB. On the at least one PCB, at least part of the components needed for the electrical function may be provided and connected in a simple way. In the case where the carrier comprises multiple PCBs, the PCBs may, for example, be provided one above the other at a pitch distance from one another. The lower PCB may then be supported by a support, while the carrier guiding part may then, for example, extend over the upper PCB, in the coupled condition of the carrier.

The resilient lip may, according to embodiments of the invention, be formed by providing a U-shaped recess in the wall of the mounting box, the open side of the U hereby facing the back side of the mounting box. However, according to further embodiments, the resilient lip may be adjacent the open front side of the mounting box, and may be formed by providing two parallel grooves extending in the wall, from the open front side in the direction towards the back side of the mounting box.

The resilient lip may be formed to be able to spring inwards and outwards about an axis parallel to the open front side.

According to embodiments of the invention, the mounting box may have a first side wall and a second opposite side wall between the open front side and the back side. The first resilient lip may be formed in the first side wall and the second side wall may be provided with a second resilient lip located opposite the first resilient lip. The second resilient lip may have a second inner surface opposite the inner surface of the first resilient lip and a second outer surface. The second inner surface may be provided with a carrier guiding part projecting from the second side wall into the mounting box and arranged to make the second resilient lip outwards when the carrier provided in the mounting box and to extend, in the coupled position, over or in the carrier the carrier (20) in the mounting box. The second outer surface may be provided with a mounting frame guiding part projecting outwards from the second side wall, the mounting frame guiding part being arranged to make the second resilient lip spring inwards when the mounting box is provided in the mounting frame and to extend, in the coupled position, at a back side of the mounting frame to clamp the mounting frame.

According to embodiments of the invention, the electrical function may be one of a dimmer, a thermostat, a sensor, a timer or a switch. Particularly for a dimmer function for which typically a large number of electronic components are needed, it is advantageous to be able to mount a carrier in the mounting box in a way according to embodiments of the invention.

According to embodiments of the invention, the mounting assembly may furthermore comprise a cover frame or a cover plate which is attachable against the mounting frame, to finish the mounting assembly after placement in the wall.

According to embodiments of the invention, the mounting frame may be made out of metal and may be provided with openings intended for screws, for attaching the mounting frame against the wall.

According to a further aspect, the present invention provides a mounting box for use in a mounting assembly according to the invention. The mounting box may have one or more of the above-described characteristics.

### Brief description of the drawings

It has to be noted that same reference signs in the different figures refer to same, similar or analogous elements.
Figures 1A and 1B respectively illustrate a first and a second exploded perspective view of a first embodiment of a mounting assembly according to the invention, looking at a first and a second side wall;
Figure 1C shows a cross section of the invention in the mounted position;
Figure 2 shows a detailed perspective view of a resilient lip to be used in a mounting assembly according to embodiments of the invention;
Figures 3A, 3B, 3C and 3D show successive mounting steps for mounting assembly of Figures 1A to 1C; and
Figure 4 shows an exploded perspective view of a mounting assembly according to a second embodiment of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" or "connecting" as used in the claims and/or in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a mounting assembly for mounting an electrical function in a wall of a building. The mounting assembly comprises a mounting box with a back side, an open front side and a wall between the back side and the open front side. The mounting assembly furthermore comprises a carrier comprising one or more components of the electrical function and being attachable in the mounting box via the open front side. The mounting assembly also comprises a mounting frame for mounting the mounting assembly against the wall. According to the invention, the wall of the mounting box is, near the open front side, provided with at least a first integrated resilient lip. An inner surface of the resilient lip which faces the interior of the mounting box is provided with a carrier guiding part arranged to make the first resilient lip spring outwards when the carrier is provided in the mounting box. An outer surface of the first resilient lip is provided with a mounting frame guiding part arranged to make the first resilient lip spring inwards when the mounting box is provided in the mounting frame.

By providing resilient lip in the wall of the mounting box, means is provided with which both the mounting frame and the carrier can be attached. The resilient lip will thus allow smooth and quick mounting of both the carrier and the mounting frame. Compared to prior art solutions, the useful mounting surface of the mounting frame will be larger. This is because, in the prior art solutions, connections (fuse connections or screws) are provided in multiple positions, whereas these can typically be omitted in mounting assemblies according to embodiments of the invention.

A further advantage of a mounting assembly according to embodiments of the invention is that demounting of the assembly may also be done in a simple way by moving the resilient lip inwards or outwards for respectively removing the mounting frame or the carrier. Because the resilient lip is capable of bending both inwards and outwards, the mounting box may simply be recuperated without damaging. This is not possible in case of existing prior art solutions, where the mounting box cannot be removed without damaging it.

The present invention will hereinafter be described by means of different embodiments. It has to be understood that these embodiments are only for the ease of understanding the invention and are not intended to limit the invention in any way.

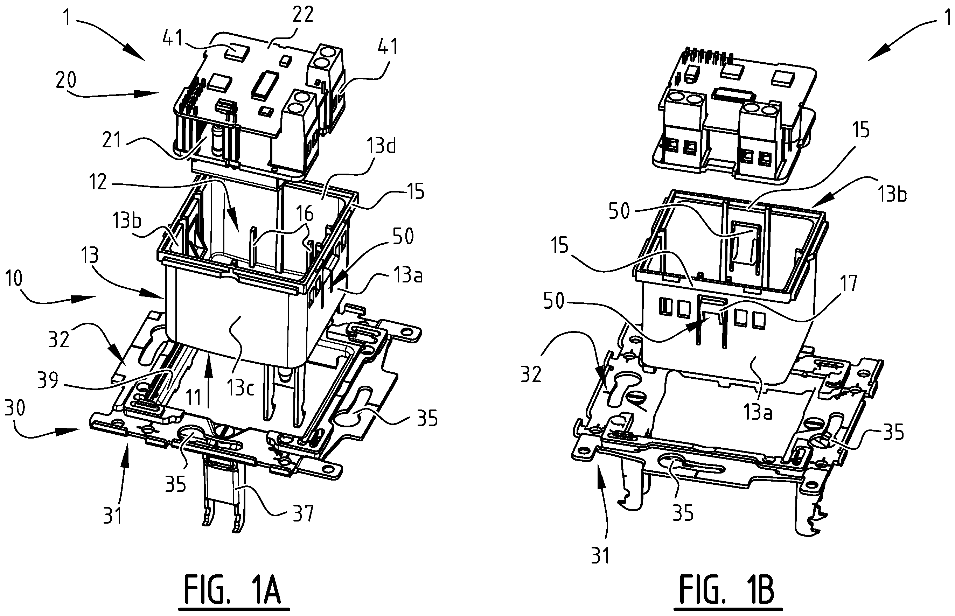

Figures 1A to 1C, 2 and 3A to 3D illustrate a mounting assembly 1 according to the invention for mounting an electrical function, for example a dimmer function, in a wall of a building. The mounting assembly 1 comprises a mounting box 10, a carrier 20 on which various electronic components 41 of the electrical function, e.g. dimmer function, are provided, and a mounting frame 30.

The mounting box 10 is intended for placement in an opening in the wall of a building. This may be any type of wall, including a wall, a panel, a floor, a ceiling, etc. The mounting box 10 has a back side 11 which may be provided with holes (not illustrated) for receiving electrical wires for connecting the electrical function to the mains. The mounting box 10 further has an open front side 12 and a wall 13 between the back side 11 and the open front side 12. According to the present embodiment, the wall 13 may comprise four side walls 13a, 13b, 13c, 13d, but the skilled person will understand that any type of mounting box 10 having any type of walls can be used according to embodiment of the present invention.

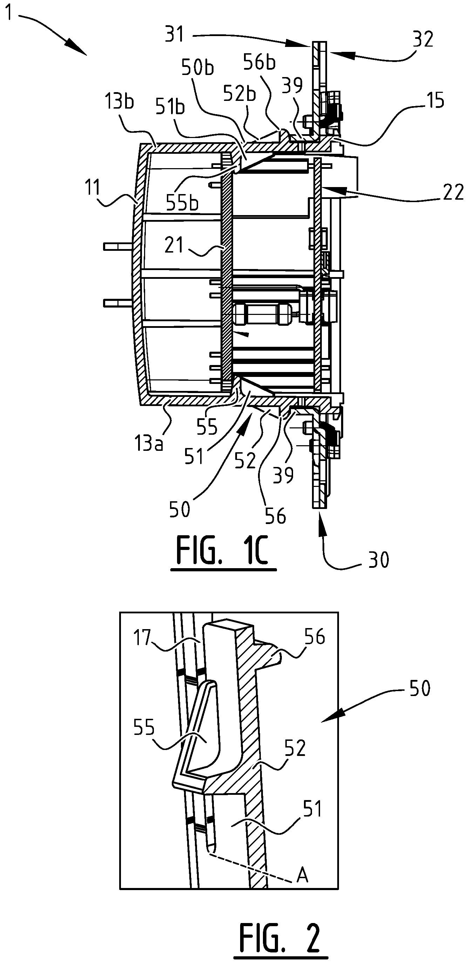

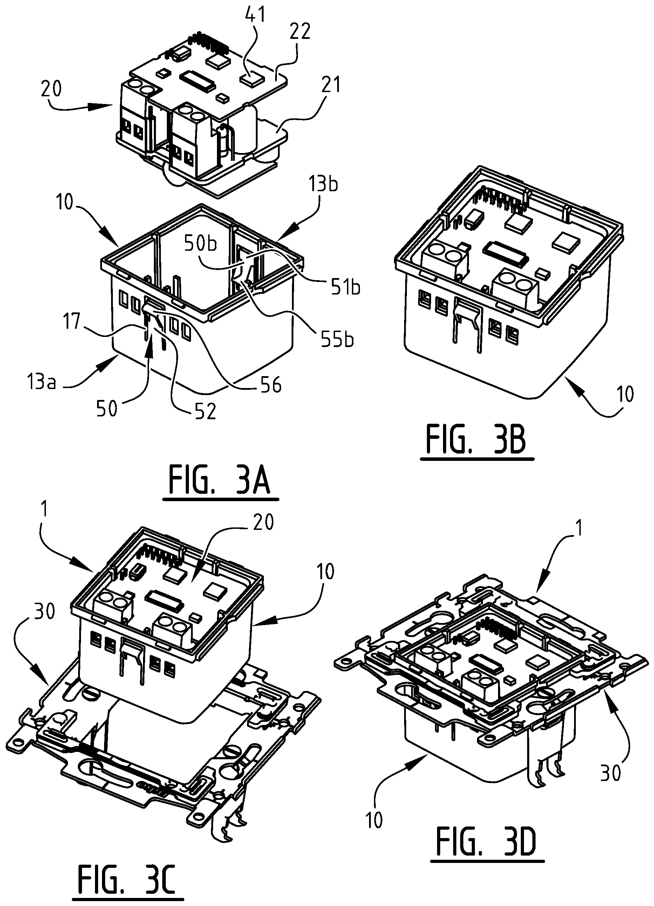

The carrier 20 is attachable in the mounting box 10 via the open front side 12. According to the present embodiment, the carrier 20 may comprise two PCBs 21, 22 provided on top of each other, on which a number of electronic components 41 are provided. A person skilled in the art will understand that the carrier 20 may also comprise only one PCB or more than two PCBs, or, more generally, that the carrier 20 can be any type of carrier as is suitable for a particular application. By means of the mounting frame 30, the mounting assembly 1 is attachable against the wall around an opening in the wall of the building in which the mounting box 10 can be provided. The mounting frame 30 may typically be made out of metal, but may also be made out of other suitable materials as known by a person skilled in the art such as, for example, a synthetic material. The mounting frame 30 may preferably be provided with openings 35 for screws (not shown) and/or with claws 37 for attaching the mounting frame 30 in the opening in the wall of the building. According to embodiments of the invention, the mounting box 10 furthermore comprises at least a first resilient lip 50 for fixing the mounting box 10 to the carrier 20 and the mounting frame 30. According to further embodiments of the invention, the mounting box 10 may comprise more than one resilient lip 50. In the example given, the mounting box 10 may comprise two resilient lips 50, 50b. In the given case, each of the side walls 13a and 13b may be provided with a resilient lip 50, 50b, near the front side 12. The resilient lips 50, 50b are integrated in respectively walls 13a, 13b and have an inner surface 51, 51b facing the interior of the mounting box 10, and an outer surface 52, 52b on the outside of the mounting box 10. The inner surface 51, 51b is provided with a carrier guiding part 55, 55b projecting from the wall 13a, 13b into the mounting box 10, as can be seen best in Figure 2. The carrier guiding part 55, 55b is arranged to make the resilient lip 50, 50b spring outwards when the carrier 20 is provided in the mounting box 10. This is illustrated in Figures 3A and 3B. Figure 3A illustrates the situation in which the carrier 20 is located outside the mounting box 10, and Figure 3B shows the situation in which the carrier 20 is located inside the mounting box 10. In the coupled position, i.e. in the position of Figure 3B or the position wherein the carrier 20 is placed inside the mounting box 10, the carrier guiding part 55, 55b extends over the carrier 20 to retain the carrier 20 in the mounting box 10. More particularly, the carrier guiding part 55, 55b extends over the first PCB 21 of the carrier 20. This can be best seen in Figure 1C. The carrier guiding part 55, 55b may gradually be going upwards, i.e. the carrier guiding part 55, 55b may preferably have an inclined surface going up, viewed from the open front side 12 to the back side 11 of the mounting box 10. In this manner, the resilient lip 50, 50b is gradually pressed outwards when the carrier 20 is provided in the mounting box 10.

The outer surface 52, 52b of the resilient lip 50, 50b is provided with a mounting frame guiding part 56, 56b projecting from the wall 13a, 13b outwards, which mounting frame guiding part 56, 56b is arranged to make the resilient lip 50, 50b spring inwards when the mounting box 10 is being provided in the mounting frame 30. This step is illustrated in Figures 3C and 3D. In the coupled position of the mounting frame 30, the mounting frame guiding part 56, 56b extends at a back side 31 of the mounting frame 30 such that the mounting frame 30, and in particular an edge 39 thereof, is clamped by the resilient 50, 50b. This can clearly be seen in Figure 1C. The projecting mounting frame guiding part 56, 56b preferably be gradually going upwards, i.e. the mounting frame guiding part 56, 56b ay preferably have an inclined surface going up, viewed from the back side 11 to the front side 12 of the flush-mounting box 10. In this manner, the resilient lip 50, 50b is gradually pressed inwards when the mounting box 10 is being provided in the mounting frame 30. Preferably, near the open front side 12, the wall 13 of the mounting box 10 may be provided with an abutment 15 at its outer circumference. The abutment 15 may be a continuous circumferential edge, but may also consist of a number of abutment parts spaced apart along the circumference. The abutment 15 may br arranged to extend on a front side 32 of the mounting frame 30, see Figure 1C, such that the mounting frame 30, and in particular the edge 39 thereof, can be clamped between the abutment 15 and the mounting frame guiding part 56, 56b.

The mounting box 10 may further be provided with a number of supports 16 for the carrier 20, such that the carrier 20 can be clamped between the supports 16 and the carrier guiding part 55, 55b. According to still further embodiments of the invention, the back side 11 of the mounting box 10 may also act as a support for the carrier 20 (not shown). In the illustrated embodiment, the supports 16 are provided as parts projecting from an inner surface of the wall 13 of the mounting box 10. However, it is also possible to provide the supports 16 against the back side 11 of the mounting box 10.

Embodiments of the invention have the advantage that the time for mounting the mounting assembly in the wall of a building is typically much shorter than for prior art mounting assemblies as the carrier 20 does not need to be fixed with screws and does not need to be fused either, but can simply be snapped in place. This also means that fewer components are needed, making the solution according to embodiments of the invention typically less expensive then existing mounting assemblies.

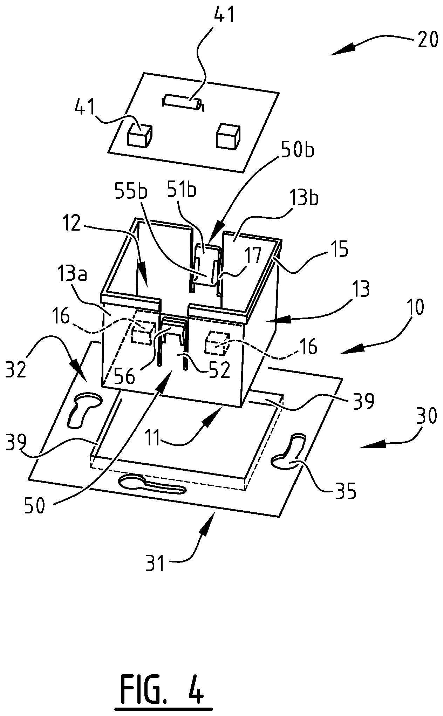

According to embodiments of the invention, the resilient lips 50, 50b may be formed by providing two U-shaped recesses 17 in the side walls 13a and 13b of the mounting box 10. According to a second embodiment illustrated in Figure 4, the resilient lips 50, 50b may be formed by providing two vertical grooves from the circumferential edge on the open front side 12, in the direction of the back side 11.

Hence, the resilient lips 50, 50b are formed in the wall 13 of the mounting box 10 such that they can spring inwards and outwards about an axis A, see Figure 2, when the mounting box 10 is provided in the mounting frame 30 (Figures 3C and 3D) and when the carrier 20 is being provided in the mounting box 10 (Figures 3A and 3B).

In the embodiment illustrated in Figures 1A to 1C and Figures 3A to 3D, the electrical function is a dimmer. A person skilled in the art will understand that the invention may also be used mounting any other electrical function such as, for example, a thermostat, a sensor, a time, a switch, a communication circuit, etc. Furthermore, the mounting assembly 1 may comprise a cover frame or cover plate which is attachable against the mounting frame 30 in a known manner for finishing of the mounting of the assembly.

A person skilled in the art will understand that the invention is not limited to the above-described embodiments, and that many modifications and variants are possible within the scope of the invention, which is only defined by the following claims.

## Claims

1. Mounting assembly (1) for mounting an electrical function in a wall of a building, the mounting assembly (1) comprising:
- a mounting box (10) for placing in an opening in the wall, the mounting box (10) having a back side (11), an open front side (12) and a wall (13) between the back side (11) and the open front side (12);
- a carrier (20) comprising one or more components (41) of the electrical function and being attachable in the mounting box (10) via the open front side (12);
- a mounting frame (30) for mounting the mounting assembly (1) against the wall;
wherein the wall (13) of the mounting box (10) is, near the open front side (12), provided with at least a first integrated resilient lip (50) with an inner surface (51) and an outer surface (52), the inner surface (51) facing the interior of the mounting box (10); wherein the inner surface (51) of the first resilient lip (50) is provided with a carrier guiding part (55) projecting from the wall (13) into the mounting box (10), the carrier guiding part (55) being arranged to make the first resilient lip (50) spring outwards when the carrier (20) is provided in the mounting box (10), and to extend, in the mounted position, over or into the carrier (20) to retain the carrier (20) in the mounting box (10); **characterized in that**, the outer surface (52) of the first resilient lip (50) is provided with a mounting frame guiding part (56) projecting outwards from the wall (13), the mounting frame guiding part (56) being arranged to make the first resilient lip (50) spring inwards when the mounting box (10) is provided in the mounting frame (30), and to extend, in the mounted position, at a back side (31) of the mounting frame (30) to clamp the mounting frame (30).

2. A mounting assembly (1) according to claim 1, wherein the wall (13) is, near the open front side (12) and at its outer circumference, provided with an abutment (15) arranged to extend at a front side (32) of the mounting frame (30) such that the mounting frame (30) can be clamped between the abutment (15) and the mounting frame guiding part (56).

3. A mounting assembly (1) according to claim 2, wherein the abutment (15) is formed as a part projecting from the outer circumference of the wall (13).

4. A mounting assembly (1) according to claim 2 or 3, wherein the abutment (15) is formed as a from the outer circumference (52) of the wall (13) projecting circumferential edge around the open front side (12).

5. A mounting assembly (1) according to any of the previous claims, wherein the mounting box (10) is provided with a support (16) for the carrier (20) for clamping the carrier (20) between the support (16) and the carrier guiding part (55).

6. A mounting assembly (1) according to claim 5, wherein the support (16) is provided as a part projecting from an inner surface of the wall (13).

7. A mounting assembly (1) according to any of the previous claims, wherein the carrier (20) comprises at least one PCB (21, 22).

8. A mounting assembly (1) according to any of the previous claims, wherein the first resilient lip (50) is formed by providing a U-shaped recess (17) in the wall (13).

9. A mounting assembly (1) according to any of the previous claims, wherein the first resilient lip (50) is formed to be able to spring inwards and outwards around an axis (A) parallel to the open front side (12).

10. A mounting assembly (1) according to any of the previous claims, wherein the mounting box (10) has a first side wall (13a) and a second opposite side wall (13b) between the open front side (12) and the back side (11), wherein the first resilient lip (50) is formed in the first side wall (13a), and wherein the second side wall (13b) is provided with a second resilient lip (50b) located opposite the first resilient lip (50).

11. A mounting assembly (1) according to claim 10, wherein the second resilient lip (50b) has a second inner surface (51b) opposite the inner surface (51) of the first resilient lip (50), and a second outer surface (52b); the second inner surface (51) being provided with a carrier guiding part (55b) projecting from the second side wall (13b) into the mounting box (10) and arranged to make the second resilient lip (50b) spring outwards when the carrier (20) is being provided in the mounting box (10), and to extend, in the coupled position, over or in the carrier (20) to retain the carrier (20) in the mounting box (10); and that the second outer surface (52) is provided with a mounting frame guiding part (56b) projecting outwards from the second side wall (13b), the mounting frame guiding part (56b) being arranged to make the second resilient lip (50b) spring inwards when the mounting box (10) is provided in the mounting frame (30), and to extend, in the coupled position, at a back side (31) of the mounting frame (30) to clamp the mounting frame (30).

12. A mounting assembly (1) according to any of the previous claims, wherein the electrical function is one of a dimmer, a thermostat, a sensor, a timer or a switch.

13. A mounting assembly (1) according to any of the previous claims, furthermore comprising a cover frame or cover plate which is attachable against the mounting frame (30).

14. A mounting assembly (1) according to any of the previous claims, wherein the mounting frame (30) is made from metal and is provided with openings (35) intended for screws.

## Patentansprüche

1. Montageanordnung (1) zur Montage einer elektrischen Funktion in einer Gebäudewand, die Montageanordnung (1) umfassend:
- eine Montagedose (10) zum Einsetzen in eine Öffnung in der Wand, wobei die Montagedose (10) eine Rückseite (11), eine offene Vorderseite (12) und eine Wand (13) zwischen der Rückseite (11) und der offenen Vorderseite (12) aufweist;
- einen Träger (20), der eine oder mehrere Komponenten (41) der elektrischen Funktion umfasst und über die offene Vorderseite (12) in der Montagedose (10) angebracht werden kann;
- einen Montagerahmen (30) zum Montieren der Montageanordnung (1) an der Wand;
wobei die Wand (13) der Montagedose (10) nahe der offenen Vorderseite (12) mit mindestens einer ersten integrierten elastischen Lippe (50) mit einer Innenfläche (51) und einer Außenfläche (52) versehen ist, wobei die Innenfläche (51) dem Inneren der Montagedose (10) zugewandt ist; wobei die Innenfläche (51) der ersten elastischen Lippe (50) mit einem Trägerführungsteil (55) versehen ist, das von der Wand (13) in die Montagedose (10) hineinragt, wobei das Trägerführungsteil (55) so angeordnet ist, dass es die erste elastische Lippe (50) nach außen federn lässt, wenn der Träger (20) in der Montagedose (10) vorgesehen ist, und dass es sich in der montierten Position über oder in den Träger (20) erstreckt, um den Träger (20) in der Montagedose (10) zu halten;
**dadurch gekennzeichnet, dass** die Außenfläche (52) der ersten elastischen Lippe (50) mit einem Montagerahmen-Führungsteil (56) versehen ist, das von der Wand (13) nach außen vorsteht, wobei das Montagerahmen-Führungsteil (56) so angeordnet ist, dass es die erste elastische Lippe (50) nach innen federn lässt, wenn die Montagedose (10) im Montagerahmen (30) vorgesehen ist, und dass es sich in der montierten Position an einer Rückseite (31) des Montagerahmens (30) erstreckt, um den Montagerahmen (30) zu klemmen.

2. Montageanordnung (1) nach Anspruch 1, wobei die Wand (13) nahe der offenen Vorderseite (12) und an ihrem Außenumfang mit einem Anschlag (15) versehen ist, der so angeordnet ist, dass er sich an einer Vorderseite (32) des Montagerahmens (30) erstreckt, so dass der Montagerahmen (30) zwischen dem Anschlag (15) und dem Montagerahmen-Führungsteil (56) geklemmt werden kann.

3. Montageanordnung (1) nach Anspruch 2, wobei der Anschlag (15) als ein Teil ausgebildet ist, das vom Außenumfang der Wand (13) vorsteht.

4. Montageanordnung (1) nach Anspruch 2 oder 3, wobei der Anschlag (15) als eine vom Außenumfang (52) der Wand (13) vorstehende Umfangskante um die offene Vorderseite (12) herum ausgebildet ist.

5. Montageanordnung (1) nach einem der vorstehenden Ansprüche, wobei die Montagedose (10) mit einer Halterung (16) für den Träger (20) zum Klemmen des Trägers (20) zwischen der Halterung (16) und dem Trägerführungsteil (55) versehen ist.

6. Montageanordnung (1) nach Anspruch 5, wobei die Halterung (16) als ein Teil vorgesehen ist, das von einer Innenfläche der Wand (13) vorsteht.

7. Montageanordnung (1) nach einem der vorstehenden Ansprüche, wobei der Träger (20) mindestens eine Leiterplatte (21, 22) umfasst.

8. Montageanordnung (1) nach einem der vorstehenden Ansprüche, wobei die erste elastische Lippe (50) durch Bereitstellen einer U-förmigen Aussparung (17) in der Wand (13) gebildet wird.

9. Montageanordnung (1) nach einem der vorstehenden Ansprüche, wobei die erste elastische Lippe (50) so geformt ist, dass sie um eine Achse (A) parallel zur offenen Vorderseite (12) nach innen und außen federn kann.

10. Montageanordnung (1) nach einem der vorstehenden Ansprüche, wobei die Montagedose (10) eine erste Seitenwand (13a) und eine zweite, gegenüberliegende Seitenwand (13b) zwischen der offenen Vorderseite (12) und der Rückseite (11) aufweist, wobei die erste elastische Lippe (50) in der ersten Seitenwand (13a) gebildet ist und wobei die zweite Seitenwand (13b) mit einer zweiten elastischen Lippe (50b) versehen ist, die der ersten elastischen Lippe (50) gegenüberliegt.

11. Montageanordnung (1) nach Anspruch 10, wobei die zweite elastische Lippe (50b) eine zweite Innenfläche (51b) gegenüber der Innenfläche (51) der ersten elastischen Lippe (50), und eine zweite Außenfläche (52b) aufweist;
wobei die zweite Innenfläche (51) mit einem Trägerführungsteil (55b) versehen ist, das von der zweiten Seitenwand (13b) in die Montagedose (10) hineinragt und so angeordnet ist, dass die zweite elastische Lippe (50b) nach außen federt, wenn der Träger (20) in der Montagedose (10) bereitgestellt wird, und dass sie sich in der gekoppelten Position über oder in den Träger (20) erstreckt, um den Träger (20) in der Montagedose (10) zu halten; und
dass die zweite Außenfläche (52) mit einem Montagerahmen-Führungsteil (56b) versehen ist, das von der zweiten Seitenwand (13b) nach außen vorsteht, wobei das Montagerahmen-Führungsteil (56b) so angeordnet ist, dass die zweite elastische Lippe (50b) nach innen federt, wenn die Montagedose (10) in dem Montagerahmen (30) vorgesehen ist, und dass es sich in der gekoppelten Position an einer Rückseite (31) des Montagerahmens (30) erstreckt, um den Montagerahmen (30) zu klemmen.

12. Montageanordnung (1) nach einem der vorstehenden Ansprüche, wobei die elektrische Funktion die eines Dimmers, eines Thermostats, eines Sensors, eines Zeitgebers oder eines Schalters ist.

13. Montageanordnung (1) nach einem der vorstehenden Ansprüche, die außerdem einen Abdeckrahmen oder eine Abdeckplatte umfasst, die an dem Montagerahmen (30) angebracht werden kann.

14. Montageanordnung (1) nach einem der vorstehenden Ansprüche, wobei der Montagerahmen (30) aus Metall hergestellt und mit Öffnungen (35) versehen ist, die für Schrauben vorgesehen sind.

## Revendications

1. Ensemble de montage (1) pour monter une fonction électrique dans un mur d'un bâtiment, l'ensemble de montage (1) comprenant :
- un boîtier de montage (10) à placer dans une ouverture dans le mur, le boîtier de montage (10) ayant un côté arrière (11), un côté avant ouvert (12) et une paroi (13) entre le côté arrière (11) et le côté avant ouvert (12) ;
- un support (20) comprenant un ou plusieurs composants (41) de la fonction électrique et pouvant être fixé dans le boîtier de montage (10) par le côté avant ouvert (12) ;
- un cadre de montage (30) pour monter l'ensemble de montage (1) contre le mur ;
dans lequel la paroi (13) du boîtier de montage (10) est, près du côté avant ouvert (12), pourvue d'au moins une première lèvre élastique intégrée (50) avec une surface intérieure (51) et une surface extérieure (52), dans lequel la surface intérieure (51) est tournée vers l'intérieur du boîtier de montage (10); dans lequel la surface intérieure (51) de la première lèvre élastique (50) est pourvue d'une partie de guidage de support (55) faisant saillie de la paroi (13) dans le boîtier de montage (10), la partie de guidage de support (55) étant conçue pour faire ressortir la première lèvre élastique (50) vers l'extérieur lorsque le support (20) est prévu dans la boîte de montage (10), et pour s'étendre, en position montée, sur ou dans le support (20) pour retenir le support (20) dans le boîtier de montage (10) ;
**caractérisé en ce que** la surface extérieure (52) de la première lèvre élastique (50) est pourvue d'une partie de guidage de cadre de montage (56) faisant saillie vers l'extérieur à partir de la paroi (13), la partie de guidage de cadre de montage (56) étant conçue pour faire ressortir la première lèvre élastique (50) vers l'intérieur lorsque le boîtier de montage (10) est prévu dans le cadre de montage (30), et pour s'étendre, en position montée, sur un côté arrière (31) du cadre de montage (30), pour serrer le cadre de montage (30).

2. Ensemble de montage (1) selon la revendication 1, dans lequel la paroi (13) est pourvue, près du côté avant ouvert (12) et à sa circonférence extérieure, d'une butée (15) conçue pour s'étendre sur un côté avant (32) du cadre de montage (30) de sorte que le cadre de montage (30) puisse être serré entre la butée (15) et la partie de guidage de cadre de montage (56).

3. Ensemble de montage (1) selon la revendication 2, dans lequel la butée (15) est réalisée sous la forme d'une partie faisant saillie de la circonférence extérieure de la paroi (13).

4. Ensemble de montage (1) selon la revendication 2 ou 3, dans lequel la butée (15) est réalisée sous la forme d'un bord circonférentiel saillant autour du côté avant ouvert (12), à partir de la circonférence extérieure (52) de la paroi (13).

5. Ensemble de montage (1) selon l'une des revendications précédentes, dans lequel le boîtier de montage (10) est pourvu d'un soutien (16) destiné au support (20), permettant le serrage du support (20) entre le soutien (16) et la partie de guidage de support (55).

6. Ensemble de montage (1) selon la revendication 5, dans lequel le soutien (16) est prévu sous la forme d'une partie faisant saillie à partir d'une surface intérieure de la paroi (13).

7. Ensemble de montage (1) selon l'une des revendications précédentes, dans lequel le support (20) comprend au moins une PCB (21, 22).

8. Ensemble de montage (1) selon l'une des revendications précédentes, dans lequel la première lèvre élastique (50) est réalisée par ménagement d'un évidement en forme de U (17) dans la paroi (13).

9. Ensemble de montage (1) selon l'une des revendications précédentes, dans lequel la première lèvre élastique (50) est réalisée de manière à pouvoir ressortir vers l'intérieur et vers l'extérieur autour d'un axe (A) parallèle au côté avant ouvert (12).

10. Ensemble de montage (1) selon l'une des revendications précédentes, dans lequel le boîtier de montage (10) présente une première paroi latérale (13a) et une seconde paroi latérale opposée (13b) entre le côté avant ouvert (12) et le côté arrière (11), la première lèvre élastique (50) étant réalisée dans la première paroi latérale (13a) et la seconde paroi latérale (13b) étant pourvue d'une seconde lèvre élastique (50b), située en face de la première lèvre élastique (50).

11. Ensemble de montage (1) selon la revendication 10, dans lequel la seconde lèvre élastique (50b) présente une seconde surface intérieure (51b) opposée à la surface intérieure (51) de la première lèvre élastique (50) et à une seconde extérieure surface (52b) ;
la seconde surface intérieure (51) étant pourvue d'une partie de guidage de support (55b) faisant saillie de la seconde paroi latérale (13b) dans le boîtier de montage (10) et étant conçue pour faire ressortir le ressort de la seconde lèvre élastique (50b) vers l'extérieur lorsque le support (20) est disposé dans le boîtier de montage (10) et pour s'étendre, dans la position accouplée, sur ou dans le support (20), de façon à retenir le support (20) dans le boîtier de montage (10) ; et
la seconde surface extérieure (52) est pourvue d'une partie de guidage de cadre de montage (56b) faisant saillie vers l'extérieur à partir de la seconde paroi latérale (13b), la partie de guidage de cadre de montage (56b) étant conçue pour faire ressortir le ressort de la seconde lèvre élastique (50b) vers l'intérieur lorsque le boîtier de montage (10) est disposé dans le cadre de montage (30) et pour s'étendre, dans la position accouplée, sur un côté arrière (31) du cadre de montage (30), de façon à serrer le cadre de montage (30).

12. Ensemble de montage (1) selon l'une des revendications précédentes, dans lequel la fonction électrique est un variateur, un thermostat, un capteur, une minuterie ou un interrupteur.

13. Ensemble de montage (1) selon l'une des revendications précédentes, comprenant en outre un cadre de recouvrement ou une plaque de recouvrement qui peut être fixé(e) contre le cadre de montage (30).

14. Ensemble de montage (1) selon l'une des revendications précédentes, dans lequel le cadre de montage (30) est en métal et est pourvu d'ouvertures (35) conçues pour recevoir des vis.
